# EUROPEAN PATENT APPLICATION

(11) **EP 4 446 209 A1**
(43) Date of publication of application: **16.10.2024**
(21) Application number: 22905688.2
(22) Date of filing: 03.03.2022
(51) Int. Cl.: B62M 6/55, B62M 6/40

(54) **DRIVE PART, POWER ASSEMBLY, AND ELECTRIC BICYCLE**

(30) Priority: 16.12.2021 CN 202111566048; 16.12.2021 CN 202123196554 U
(71) Applicant: Guangdong Welling Motor Manufacturing Co., Ltd., Foshan, Guangdong 528311 (CN)
(72) Inventor: ZHOU, Jialin, Foshan, Guangdong 528311 (CN); FAN, Qingquan, Foshan, Guangdong 528311 (CN); WANG, Hongxiao, Foshan, Guangdong 528311 (CN)
(74) Representative: RGTH
(86) International application number: PCT/CN2022/079097
(87) International publication number: WO 2023/108917

(57) **Abstract**

A drive part (10), a power assembly, and an electric bicycle are provided. The drive part (10) comprises a central shaft (100), a shaft sleeve (200), a first clutch (310), a second clutch (320), and a power input member (400). The shaft sleeve (200) is sleeved on the central shaft (100) The shaft sleeve (200) and the central shaft (100) are coaxially provided. The shaft sleeve (200) and the central shaft (100) unidirectionally transmit power by means of the first clutch (310). The power input member (400) and the shaft sleeve (200) unidirectionally transmit power through the second clutch (320).

## Description

### CROSS-REFERENCE TO RELATED APPLICATIONS

The present application claims the priority to Chinese patent application No. 202111566048.5, titled "Drive Part, Power Assembly, and Electric Bicycle", filed on December 16, 2021, and Chinese patent application No. 202123196554.8, titled "Drive Part, Power Assembly, and Electric Bicycle", filed on December 16, 2021, the content of which are incorporated herein in their entirety by reference.

### TECHNICAL FIELD

The present disclosure relates to the field of bicycles, and in particular to a drive part, a power assembly, and a bicycle.

### BACKGROUND

Nowadays, as urban road congestion is becoming increasingly serious and the concept of ecological protection is becoming increasingly popular, many people have begun to turn to bicycles for travel, and bicycles are also generally favored by young people as a way for leisure and travelling. In order to make travel more comfortable, more convenient and faster, it has become a trend to convert bicycles into electric or power-assisted bicycles.

In the structure of the power assembly of an electric bicycle, the motor shall not be affected when manpower is transmitted to the output portions, and it will also not affect manpower when the motor power is transmitted to the output portions. To achieve this purpose, two overrunning clutches may be adopted. Currently, most power assemblies have two overrunning clutches, one is arranged in the transmission system and the other is arranged between the output portion and the pedal shaft. Although this structure can avoid interference between manpower and motor power, the gears between the two overrunning clutches will mesh when driven by manpower, which not only increases the human burden, but also generates noise. Meanwhile, since an overrunning clutch is arranged in the transmission system, the freedom of designing the transmission system is limited.

### SUMMARY

The object of the present disclosure is to solve at least one of the technical problems existing in the prior art and to provide a drive part, a power assembly, and an electric bicycle.

According to an embodiment in a first aspect of the present disclosure, a drive part is provided. The drive part comprises a central shaft, a shaft sleeve, a first clutch, a second clutch, and a power input member. The shaft sleeve is sleeved on the central shaft, and the shaft sleeve is coaxially disposed with the central shaft. Power can be unidirectionally transmitted between the shaft sleeve and the central shaft by means of the first clutch, and power can be unidirectionally transmitted between the power input member and the shaft sleeve by means of the second clutch. The power input member and the shaft sleeve are coaxially disposed.

As the drive part is provided with the first clutch and the second clutch, when the central shaft is driven by manpower to rotate forward, the first clutch works, so that manpower transmits power to the shaft sleeve by means of the first clutch. At this time, the second clutch is idling, so that manpower does not affect the power input member, and the shaft sleeve outputs manpower. When the power input member rotates forward, the second clutch works, so that power is transmitted to the shaft sleeve by means of the second clutch. At this time, the first clutch is idling, so that the power of the power input member does not affect the central shaft, and the shaft sleeve outputs power. Manpower and motor power can be input independently or simultaneously, and the drive part is able to avoid interference between manpower and motor power. There is no transmission system between the first clutch and the second clutch, which avoids ineffective transmission and ineffective meshing.

According to the drive part discussed in the embodiment in the first aspect of the present disclosure, the shaft sleeve comprises a first shaft sleeve portion and a second shaft sleeve portion, and an inner diameter of the first shaft sleeve portion is larger than an inner diameter of the second shaft sleeve portion.

According to the drive part discussed in the embodiment in the first aspect of the present disclosure, a first bearing is disposed between the second shaft sleeve portion and the central shaft.

According to the drive part discussed in the embodiment in the first aspect of the present disclosure, the first clutch comprises an input portion and an output portion. The input portion is connected to the central shaft. Power is unidirectionally transmitted between the input portion and the first shaft sleeve portion by means of the output portion.

According to the drive part discussed in the embodiment in the first aspect of the present disclosure, a connecting end between the input portion and the central shaft is divided into a connection area and an opening area. The connection area is connected to the central shaft. An opening groove is formed between the opening area and the central shaft. An end of the first shaft sleeve portion extends into the opening groove.

According to the drive part discussed in the embodiment in the first aspect of the present disclosure, the power input member is disposed on the second shaft sleeve portion, and is coaxially disposed with the second shaft sleeve portion.

According to the drive part discussed in the embodiment in the first aspect of the present disclosure, a second bearing is disposed between the power input member and the second shaft sleeve portion. A boss portion is disposed on an outer wall of the second shaft sleeve portion, positions and installs the second bearing and the second clutch.

According to the drive part discussed in the embodiment in the first aspect of the present disclosure, both the first clutch and the second clutch are overrunning clutches.

According to an embodiment in a second aspect of the present disclosure, a power assembly is provided. The power assembly comprises the drive part of the embodiment in the first aspect, a motor assembly, and a transmission portion. The motor assembly outputs power. An input end of the transmission portion is connected to an output end of the motor assembly. An output end of the transmission portion is connected to the power input member.

Beneficial effects: as the power assembly adopts the drive part of the embodiment in the first aspect, and neither the first clutch nor the second clutch is arranged in a transmission system, on one hand, the power assembly can avoid interference between manpower and motor power, and on the other hand, it will have greater freedom to design the transmission system.

According to an embodiment in a third aspect of the present disclosure, an electric bicycle is provided, which comprises the power assembly of the embodiment in the second aspect.

As this electric bicycle adopts the power assembly of the embodiment in the second aspect, interference between manpower and motor power is avoided, and ineffective transmission and ineffective meshing are avoided.

### BRIEF DESCRIPTION OF DRAWINGS

The present disclosure will be further described below in conjunction with the accompanying drawings and embodiments;
FIG. 1 is a schematic structural diagram of a drive part according to an embodiment of the present disclosure;
FIG. 2 is a structural diagram of a power assembly according to an embodiment of the present disclosure; and
FIG. 3 is a cross-sectional view along lines A-A of FIG. 2.

### DETAILED DESCRIPTION

This section will describe specific embodiments of the present disclosure in detail. The preferred embodiments of the present disclosure are shown in the accompanying drawings. The accompanying drawings are provided to supplement the description of the text part of the specification with graphics, so that each technical feature and overall technical solution of the present disclosure can be intuitively and vividly understood, but it shall not be interpreted as a limitation of the scope of protection of the present disclosure.

In the description of the present disclosure, it should be understood that descriptions regarding orientation, such as up, down, front, back, left, right, etc., are based on the orientation or position relationships shown in the accompanying drawings only for the purpose of facilitating the description of the present disclosure and simplifying the description, rather than indicating or implying that the device or element referred to must have a specific orientation, be constructed and operate in a specific orientation. Therefore, it should not be construed as a limitation on the present disclosure.

In the description of the present disclosure, "several" means one or more, "a plurality of" means two or more, greater than, less than, more than a number, etc. are understood to exclude this number, and above, below, within a number, etc. are understood to comprise this number. If there is a description of first and second, it is only for the purpose of distinguishing technical features, and shall not be understood as indicating or implying the relative importance or implicitly indicating the number of indicated technical features or implicitly indicating the order relation of indicated technical features.

In the description of the present disclosure, except for that there exists clear limitation, words such as dispose, installation, and connection should be understood in a broad sense. Those having ordinary skill in the art can reasonably determine the specific meaning of the above words in the present disclosure based on the specific content of the technical solution.

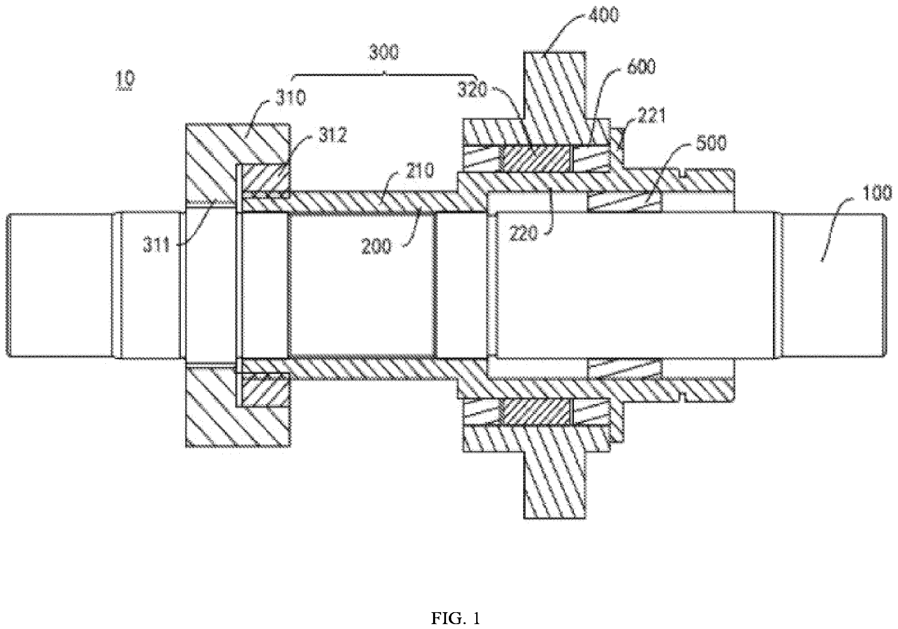

Referring to FIG. 1, a drive part comprises: a central shaft 100, a shaft sleeve 200, a first clutch 310, a second clutch 320, and a power input member 400.

The central shaft 100 is sleeved on the shaft sleeve 200, and the shaft sleeve 200 is coaxially disposed with the central shaft 100. The shaft sleeve 200 and the central shaft 100 are disposed to rotate coaxially, and in this embodiment, coaxial rotation between the shaft sleeve 200 and the central shaft 100 is realized by means of a first bearing 500.

In an exemplary embodiment, the shaft sleeve 200 comprises a first shaft sleeve portion 210 and a second shaft sleeve portion 220. An inner diameter of the first shaft sleeve portion 210 is not less than an inner diameter of the second shaft sleeve portion 220, and an inner surface of the first shaft sleeve portion 210 and an outer surface of the central shaft 100 are disposed in a clearance fit manner, thereby ensuring that the power input member 400 in operation does not affect the central shaft 100 and is coaxially disposed with the central shaft 100. A stepped structure is formed between the first shaft sleeve portion 210 and the second shaft sleeve portion 220.

An outer diameter of the second shaft sleeve portion 220 is greater than that of the first shaft sleeve portion 210, and the inner surface of the first shaft sleeve portion 210 is disposed in a clearance fit manner with the central shaft 100, so that a gap is formed between the second shaft sleeve portion 220 and the central shaft 100. In order to make the coaxiality between the shaft sleeve 200 and the central shaft 100 better and ensure that the shaft sleeve 200 and the central shaft 100 are coaxially rotated, the first bearing 500 is disposed between the second shaft sleeve portion 220 and the central shaft 100, which can ensure better system stability.

Referring to FIG. 1, both the first clutch 310 and the second clutch 320 may be overrunning clutches. The overrunning clutch is a clutch which automatically engages and disengages by utilizing changes in rotational speed or changes in direction of rotation of driving and driven members. When the driving member drives the driven member such that they rotate together, it is called the combined state of the overrunning clutch. When the driving members and the driven members are disengaged and rotate at their respective speeds, it is called an overrunning state.

The first clutch 310 is configured to connect the shaft sleeve 200 and the central shaft 100, thereby realizing unidirectional power transmission between the shaft sleeve 200 and the central shaft 100. The second clutch 320 is configured to connect the power input member 400 and the shaft sleeve 200, thereby realizing unidirectional power transmission between the power input member 400 and the shaft sleeve 200. The power input member 400 and the shaft sleeve 200 are disposed to rotate coaxially.

Both the first clutch 310 and the second clutch 320 may be special mechanical clutches. In mechanical transmission, changes in relative speed or changes in direction of rotation of driving and driven portions cause them to be automatically engaged or disengaged. Driving members may only make a driven member rotate in one direction. If the driving members changes direction or the driven member rotates at a higher speed than that of the driving members, the driven members will automatically disengage and will not transmit power.

The overrunning clutch realizes high and low speed conversion and overrunning functions in fast-feed machinery, as well as the indexing function of step clearance motion and precise positioning, and also may be used in conjunction with ball screws or other components to prevent reversal and realize self-locking and reversal stop function.

It should be understood that both the first clutch 310 and the second clutch 320 may be wedge type overrunning clutches, roller type overrunning clutches and ratchet type overrunning clutches.

In this embodiment, the first clutch 310 is the ratchet type overrunning clutch, and the second clutch 320 is the roller type overrunning clutch. For example, the ratchet type overrunning clutch comprises a ratchet, a clutch support pin, a clutch pin, a clutch spring, a pawl, and a driving wheel. Under the action of the spring, a front end of the pawl always faces upward to be embedded into a tooth groove of the ratchet. When power is input and drives start, the ratchet begins to rotate under the action of a connecting shaft, and drives the pawl to rotate together. Under the action of the clutch pin, the pawl drives the driving wheel to rotate. At this time, the ratchet type overrunning clutch is in a switch-on state. After the start, the driving wheel and pawl reach a certain speed. Under the action of centrifugal force, a tail end of the pawl is thrown out and rotates with the little finger of the clutch as a circle center. A front end of the pawl overcomes the elastic force of the clutch spring and separates from a bottom of the ratchet groove, so that the pawl is in a disengaged state, and the ratchet and driving wheel rotate at their own speeds without interfering with each other.

The second clutch 320 is the roller type overrunning clutch. The roller type overrunning clutch comprises an inner ring, a plurality of rollers, an outer ring, a spring, an ejector pin and the like. Generally, the inner ring is the driving member, and the outer ring is the driven member. When the inner ring rotates forward, the plurality of rollers are wedged to drive the outer ring to rotate, so that the clutch is engaged. When the inner ring rotates reversely, the plurality of rollers retreat into a wide groove portion, and the outer ring does not move, so that the clutch is disengaged. If the outer ring is driven by another system to rotate in the same direction as the inner ring, the clutch will be automatically engaged when the outer ring rotates slower than the inner ring, and the clutch will be automatically disengaged when the outer ring rotates faster than the inner ring. The smaller the number of the rollers in the roller type overrunning clutch is, and the larger the member contact stress is. The rollers can roll freely in a raceway, and contact points between the rollers and the inner and outer rings change frequently, leading to a relatively uniform wear.

In this embodiment, the first clutch 310 is used as a manpower overrunning clutch, the second clutch 320 is used as a motor overrunning clutch, the central shaft 100 is a pedal shaft, and the shaft sleeve 200 is used as an output of power. The shaft sleeve 200 is sleeved on the pedal shaft, and these two parts rotate coaxially and are connected by means of the manpower overrunning clutch. The shaft sleeve 200 and the power input member 400 are coaxially disposed, and these two parts rotate coaxially and are connected by means of the motor overrunning clutch. Coaxiality is mainly ensured by means of fits and bearings.

When the pedal shaft is driven by manpower to rotate forward, the manpower overrunning clutch works, and the manpower is transmitted to the shaft sleeve 200 by means of the manpower overrunning clutch. At this time, the motor overrunning clutch is idling, so that the manpower does not affect the power input member 400, and the manpower is outputted by the shaft sleeve 200. When the pedal shaft rotated reversely, the manpower overrunning clutch is idling, so that no manpower is inputted to the power shaft sleeve.

When the power input member is driven by motor power to rotate forward, the motor overrunning clutch works, so that the motor power is transmitted to the shaft sleeve 200 by means of the motor overrunning clutch. At this time, since the manpower overrunning clutch is idling, the motor power will not affect the pedal shaft, and power is outputted by the shaft sleeve 200.

Certainly, it can be appreciated that manpower and motor power may be inputted independently, and may also be inputted simultaneously.

By setting the positions of the first clutch 310 and the second clutch 320, the drive part can avoid interference between manpower and motor power, reduce human burden and noise. Meanwhile, ineffective engagement in the transmission system can be avoided, while the freedom of designing the transmission system is not affected.

Referring to FIG. 1, the first clutch 310 comprises an input portion 311 and an output portion 312. The input portion 311 is connected to the central shaft 100. Unidirectional power transmission is realized between the input portion 311 and the first shaft sleeve portion 210 by means of the output portion 312.

Referring to FIG. 1, in an exemplary embodiment, a connecting end between the central shaft 100 and the input portion 311 is divided into two portions: a connection area and an opening area. The connection area is connected to the central shaft 100. After the input portion 311 is assembled and connected to the central shaft 100, an opening groove is formed between the opening area and the central shaft 100. An end of the first shaft sleeve portion 210 may extend into this opening groove, and the output portion 312 is disposed between an outer ring of the first shaft sleeve portion 210 and an outer wall of the opening area. The output portion 312 may be engaged with the outer wall of the opening area, so as to achieve power transmission.

The connection area of the input portion 311 is disposed on the left side, and the opening area is disposed on the right side. The connection area and the central shaft 100 are connected by splines. A boss portion is disposed at a bottom of the input portion 311 to form a connection portion, and a gap is formed on the other side of the boss portion. After the input portion 311 is connected by the splines, the opening groove is formed between the opening area and the central shaft 100 and opens to the right side. The first shaft sleeve portion 210 may extend into the opening groove. A gap is formed between the outer ring of the first shaft sleeve portion 210 and the outer edge of the opening area of the input portion 311, and the output portion 312 is disposed within the gap. When the output portion 312 and the input portion 311 are engaged, the output portion 312 unidirectionally transmits power to the shaft sleeve 200. In this way, the first clutch 310 realizes the connection between the input portion 311 and the central shaft 100 by means of the structural arrangement between the input portion 311 and the output portion 312, and realizes the cooperation between the output portion 312 and the central shaft and the cooperation between the output portion 312 and the input portion 311. Thus, the function of unidirectionally transmitting power to the shaft sleeve 200 is realized.

In one embodiment, the power input member 400 is disposed on the second shaft sleeve portion 220 and is coaxially disposed with the second shaft sleeve portion 220. A second bearing 600 is disposed between the power input member 400 and the second shaft sleeve portion 220, and coaxial rotation is ensured by means of the cooperation between the second bearing 600 and the power input member 400. A boss portion 221 is disposed on an outer wall of the second shaft sleeve portion 220, and configured to position and install the second bearing 600 and the second clutch 320, which can facilitate the installation of the second bearing 600 and the second clutch 320.

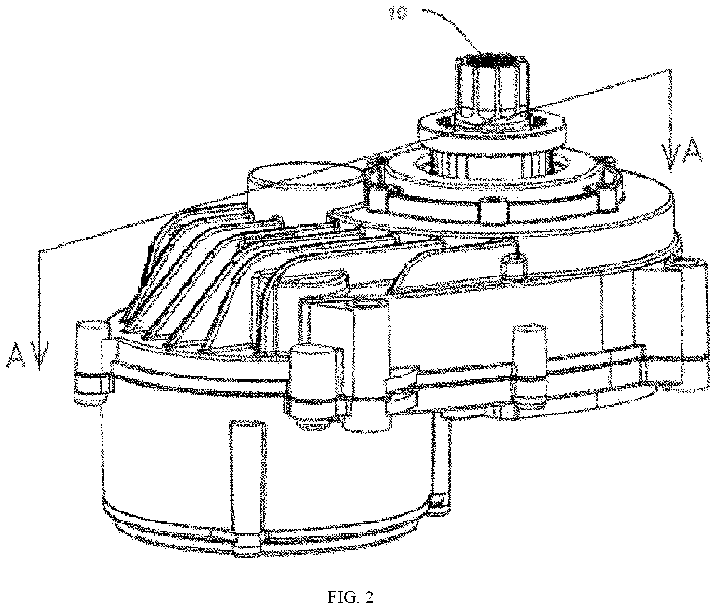

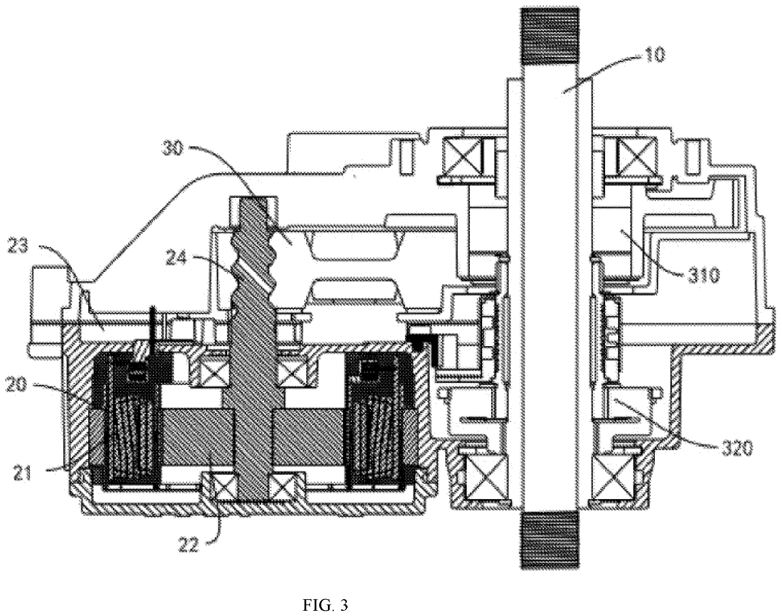

Referring to FIGS. 2 and 3, according to an embodiment in a second aspect of the present disclosure, a power assembly is provided. The power assembly comprises the drive part 10 according to the embodiment in the first aspect of the present disclosure, a motor assembly 20, and a transmission portion 30. The motor assembly 20 is configured to output power. An input end of the transmission portion 30 is connected to an output end of the motor assembly 20. An output end of the transmission portion 30 is connected to the power input member 400. This power assembly can avoid not only interference between manpower and motor power, but also ineffective meshing in a transmission system, and has less limitation regarding the freedom in designing the transmission system.

In some embodiments, the motor assembly 20 comprises a stator structure 21, a rotor structure 22, a housing structure 23, and an output shaft 24. The stator structure 21 is disposed within the housing structure 23, and the rotor structure 22 is disposed outside the stator structure 21 and connected to the output shaft 24, which is connected to the input end of the transmission portion 30. The output shaft 24 is arranged parallel to the central shaft 100, and the output shaft 24 and the power input member 400 are connected by means of the transmission portion 30. The transmission portion 30 may be a reducer or a transmission gear or another structure.

The stator structure 21 is composed of a plurality of segmented iron core structures, and the stator structure 21 and the housing structure 23 are installed in an interference fit manner. The stator structure 21 is formed by splicing a plurality of segmented iron core assemblies. A flat wire winding is disposed on the segmented stator structure. The block iron core structure and the flat wire winding structure can effectively improve the slot fill factor which is increased from about 55% to about 75%. Therefore, the power density and performance of a motor is improved, without increasing the size of the motor; thus the endurance can be improved.

A space between the stator structure 21 and the housing structure 23 is filled with resin glue, thereby not only improving the stiffness of the stator structure 21 of the motor and reducing the vibration noise of the power assembly, but also effectively improving the heat dissipation performance of the motor to prevent efficiency decrease of the motor due to excessive temperature. The resin glue is made of a polymer resin material, preferably, a thermosetting resin material, which can relatively improve stiffness and thermal conductivity.

The motor assembly 20 further comprises a busbar structure, which has a boss pedestal matching a wire hole of the housing structure 23. The boss pedestal can not only prevent the resin glue from seeping out, but also fix a three-phase power terminal of the stator winding, which is conducive to the positioning of the power terminal, and the boss pedestal is conducive to installation of an electric control panel in a plug-in manner. The busbar structure comprises a multi-layer copper bar structure, which has a copper bar terminal connected to a wire outlet end of the winding. Multiple layers of copper bars comprise at least one bent copper bar structure, which has at least one Z-shaped bent structural feature in the axial space. Thus, the bent copper bar may span two layers in the axial space, so that the spare space of other copper bar layers can be sufficiently utilized, and the number of copper bar layers can be reduced.

The power assembly comprises: the drive part 10, the motor assembly 20, and the transmission portion 30. The motor assembly 20 comprises the stator structure 21, the rotor structure 22, the housing structure 23, and the output shaft 24.

The stator structure 21 comprises a plurality of segmented iron cores and applies a flat wire winding or a square conductor winding to improve the slot fill factor and motor power density. The stator structure 21 and the housing structure 23 are fixed by interference connection, and the space between the housing structure 23 and the stator structure 21 is filled with resin glue, thereby effectively improving the stiffness of a stator assembly and the thermal conductivity of the stator winding, reducing the vibration noise of the power assembly and improving the heat dissipation performance of the motor. The copper bars of the busbar structure are of the Z-shaped structure to reduce the axial height of the stator assembly, thereby reducing the size of the motor.

An electric bicycle according to an embodiment in a third aspect of the present disclosure comprises the power assembly of the embodiment in the second aspect.

The embodiments of the present disclosure have been described in detail above with reference to the accompanying drawings. However, the present disclosure is not limited to the above-mentioned embodiments. Within the scope of knowledge possessed by those having ordinary skill in the art, various modifications can be made without departing from the purpose of the present disclosure.

## Claims

1. A drive part comprising:
a central shaft;
a shaft sleeve sleeved on the central shaft, wherein the shaft sleeve and the central shaft are coaxially disposed;
a power input member coaxially disposed with the shaft sleeve;
a first clutch, through which power is unidirectionally transmittable between the shaft sleeve and the central shaft; and
a second clutch, through which power is unidirectionally transmittable between the power input member and the shaft sleeve.

2. The drive part according to claim 1, wherein the shaft sleeve comprises a first shaft sleeve portion and a second shaft sleeve portion, and an inner diameter of the first shaft sleeve portion is greater than an inner diameter of the second shaft sleeve portion.

3. The drive part according to claim 2, further comprising a first bearing disposed between the second shaft sleeve portion and the central shaft.

4. The drive part according to claim 2, wherein:
the first clutch comprises an input portion and an output portion;
the input portion is connected to the central shaft; and
power is unidirectionally transmittable between the input portion and the first shaft sleeve portion through the output portion.

5. The drive part according to claim 4, wherein:
a connecting end between the input portion and the central shaft is divided into a connection area and an opening area;
the connection area is connected to the central shaft;
an opening groove is formed between the opening area and the central shaft, and
an end of the first shaft sleeve portion extends into the opening groove.

6. The drive part according to claim 2, wherein the power input member is disposed on the second shaft sleeve portion and is coaxially disposed with the second shaft sleeve portion.

7. The drive part according to claim 6, wherein:
a second bearing is disposed between the power input member and the second shaft sleeve portion;
a boss portion is disposed on an outer wall of the second shaft sleeve portion; and
the boss portion positions and installs the second bearing and the second clutch.

8. The drive part according to any one of claims 1 to 7, wherein both the first clutch and the second clutch are overrunning clutches.

9. A power assembly comprising:
a drive part according to any one of claims 1 to 8;
a motor assembly outputs power; and
a transmission portion, wherein an input end of the transmission portion is connected to an output end of the motor assembly, wherein an output end of the transmission portion is connected to a power input member.

10. An electric bicycle comprising a power assembly according to claim 9.
